# EUROPEAN PATENT APPLICATION

(11) **EP 4 362 210 A1**
(43) Date of publication of application: **01.05.2024**
(21) Application number: 22901710.8
(22) Date of filing: 28.11.2022
(51) Int. Cl.: H01M 50/538, H01M 10/04, H01M 50/213, H01M 50/167, H01M 50/183

(54) **CYLINDRICAL BATTERY AND CURRENT COLLECTOR APPLIED THERETO, AND BATTERY PACK AND VEHICLE INCLUDING SUCH CYLINDRICAL BATTERY**

(30) Priority: 01.12.2021 KR 20210169769; 18.07.2022 KR 20220088437
(71) Applicant: LG Energy Solution, Ltd., Seoul 07335 (KR)
(72) Inventor: LIM, Jae-Won, Daejeon 34122 (KR); KIM, Hak-Kyun, Daejeon 34122 (KR); LEE, Je-Jun, Daejeon 34122 (KR); JUNG, Ji-Min, Daejeon 34122 (KR); CHOI, Su-Ji, Daejeon 34122 (KR)
(74) Representative: Goddar, Heinz J.
(86) International application number: PCT/KR2022/019008
(87) International publication number: WO 2023/101352

(57) **Abstract**

Disclosed is a cylindrical battery, which electrically connects an electrode assembly and a battery housing included in a cylindrical battery. The current collector includes a loop-shaped portion configured to surround a periphery of a central axis of the electrode assembly to define an opening region that exposes the first electrode tab; a tab coupling portion configured to extend toward the opening region from an inner side of the loop-shaped portion adjacent to the opening region and coupled with the first electrode tab exposed through the opening region; and a housing coupling portion configured to extend toward the inner circumference of the battery housing from an outer side of the loop-shaped portion and coupled with the battery housing.

## Description

### TECHNICAL FIELD

The present disclosure relates to a cylindrical battery, a current collector applied thereto, and a battery pack and a vehicle including the cylindrical battery. More particularly, the present disclosure relates to a current collector having a structure capable of preventing damage to a welding portion with the electrode assembly even when an external impact is applied, a cylindrical battery including the current collector, and a battery pack and a vehicle including the cylindrical battery.

The present application claims priority to Korean Patent Application No. 10-2021-0169769 filed in the Republic of Korea on December 1, 2021, and Korean Patent Application No. 10-2022-0088437 filed in the Republic of Korea on July 18, 2022, the disclosures of which are incorporated herein by reference.

### BACKGROUND ART

A conventional cylindrical battery generally has a structure in which a tab that connects a jelly-roll and an external terminal is welded to a foil of the jelly-roll. In a cylindrical battery with this structure, the current path is limited and the resistance of the jelly-roll itself is very high.

Accordingly, a method of lowering the resistance by increasing the number of tabs connecting the jelly-roll and the external terminal has been attempted, but increasing the number of tabs in this way has a limit in lowering the resistance to a desired level and sufficiently secure a current path.

Accordingly, it is necessary to develop a new jelly-roll structure and a current collector structure suitable for the jelly-roll structure in order to reduce the self-resistance of the jelly-roll. In particular, the application of such a new structure of jelly-roll and current collector is more necessary for devices that require a battery pack having high output/high capacity, such as, for example, an electric vehicle.

In addition, in the case of a battery pack applied to an electric vehicle or the like, the battery pack is inevitably exposed to a lot of vibration and shock when considering the use environment. Therefore, there is a need to develop a cylindrical battery having a structure in which the welding portion is less damaged even when vibration and external impact are applied, and a current collector structure applied to the cylindrical battery.

In addition, there is a need to develop a cylindrical battery having a structure in which the coupling force between the current collector and the battery housing is maintained in an improved state, and a current collector structure applied to the cylindrical battery.

Moreover, the need for developing a cylindrical battery with an improved energy density by minimizing the dead space inside the battery housing when the current collector and the battery housing are coupled has emerged.

### DISCLOSURE

### Technical Problem

The present disclosure is designed to solve the problems of the related art, and therefore the present disclosure is directed to providing a current collector having a structure suitable for an electrode assembly having a low resistance structure, and a cylindrical battery including the current collector.

In addition, the present disclosure is directed to providing a current collector having a structure capable of improving the coupling force of a coupling portion between a current collector and a battery housing, and a cylindrical battery including the current collector.

In addition, the present disclosure is directed to providing a current collector having a structure capable of greatly reducing the possibility of damage to the welding portion with the electrode assembly and/or the welding portion with the battery housing even when vibration and impact are applied, and a cylindrical battery including the current collector.

Moreover, the present disclosure is directed to providing a current collector having a structure capable of improving the energy density of the cylindrical battery, and a cylindrical battery including the current collector.

In addition, the present disclosure is directed to providing a current collector having a structure capable of increasing the convenience of a welding process for electrical connection between the battery housing and the current collector and thereby improving productivity in manufacturing a cylindrical battery, and a cylindrical battery including the current collector.

The objects of the present disclosure are not limited to the above-mentioned objects, and these and other objects and advantages of the present disclosure may be understood by the following description, and will be understood more clearly by an embodiment of the present disclosure. Additionally, it is apparent that the objects and advantages of the present disclosure may be realized by the means set forth in the appended claims and a combination thereof.

### Technical Solution

In one aspect of the present disclosure, there is provided a current collector useable in a cylindrical battery according to the present disclosure may electrically connect an electrode assembly and a battery housing included in the cylindrical battery.

The current collector may electrically connect an electrode tab made of an uncoated portion and exposed at one side end of the electrode assembly and an inner circumference of the battery housing.

At least a part of the current collector may be in surface-to-surface contact with the electrode tab. In addition, at least another part of the current collector may be in surface-to-surface contact with the inner circumference of the battery housing.

The electrical connection portion of the current collector may be fixed through welding.

The current collector may include a loop-shaped portion configured to surround a periphery of a central axis of the electrode assembly to define an opening region that exposes an electrode tab made of an uncoated portion at one side end of the electrode assembly.

A current collector hole may be provided at a center of the loop-shaped portion. The current collector hole may communicate with a winding hole of the electrode assembly.

The loop-shaped portion may form a closed loop surrounding the current collector hole.

The loop-shaped portion may have one or more cut portions. When the loop-shaped portion has a cut portion, the loop-shaped portion may be regarded as substantially forming a closed loop.

The current collector may include a tab coupling portion configured to extend toward the opening region from an inner side of the loop-shaped portion adjacent to the opening region and coupled with the electrode tab exposed through the opening region.

The tab coupling portion may extend from the loop-shaped portion in a centripetal direction of the electrode assembly.

The tab coupling portion may extend in a linear shape, an arc shape, or a combined shape thereof.

The current collector may include a housing coupling portion configured to extend from an outer side of the loop-shaped portion toward the inner circumference of the battery housing and coupled with the battery housing.

The extension directions of the tab coupling portion and the housing coupling portion may be spaced apart from each other along the circumferential direction of the electrode assembly.

The loop-shaped portion may include a plurality of first portions disposed to be spaced apart along a circumferential direction at a first radial location of the exposed region of the first electrode tab; a plurality of second portions disposed between first portions adjacent in the circumferential direction at a second radial location outside the first radial location; and a third portion configured to define a space where the tab coupling portion extends by connecting the first portions adjacent in the circumferential direction and the second portion located therebetween.

The first portion, the second portion, and the third portion may be located on the same plane.

The tab coupling portion may extend from the second portion toward a center of the electrode assembly.

A gap may be provided between the tab coupling portion and the third portion.

The third portion may extend in a linear shape, an arc shape or a combined shape thereof. Similarly, the gap may extend in a linear shape, an arc shape or a combined shape thereof.

The opening region may extend radially from a center of the electrode assembly.

The tab coupling portion and the housing coupling portion may be connected via the loop-shaped portion.

The tab coupling portion may extend in a centripetal direction from the second portion, and the housing coupling portion may extend in a centrifugal direction from the first portion.

The housing coupling portion may include a contact portion coupled to the inner circumference of the battery housing; and a connection portion configured to connect the contact portion and the loop-shaped portion.

The contact portion may extend along a circumferential direction of the inner circumference of the battery housing.

The connection portion may extend in a centrifugal direction and an axial direction of the electrode assembly.

The connection portion may include at least one bending portion. The bending portion may be provided in a region adjacent to the contact portion. The bending portion may protrude in a centripetal direction. Optionally, the bending portion may protrude in an axial direction of the electrode assembly.

The present disclosure may provide a cylindrical battery including the current collector.

The cylindrical battery may accommodate an electrode assembly of a jelly-roll structure wound into a cylindrical shape.

The electrode assembly may include a first electrode tab made of an uncoated portion and exposed at one axial side thereof.

The current collector may be in contact with and electrically connected to the first electrode tab of the electrode assembly.

The electrode assembly may include a second electrode tab made of an uncoated portion exposed at the other axial side thereof. The polarity of the second electrode tab may be opposite to that of the first electrode tab.

An open portion may be provided at one axial side of the battery housing, and the housing coupling portion may be connected to the inner circumference of the battery housing where the open portion is provided.

A beading portion depressed in a centripetal direction may be provided at one axial side of the battery housing.

The housing coupling portion may be connected to an inner circumference of the beading portion.

The housing coupling portion may be connected to the inner circumference of the beading portion by welding or the like.

The cylindrical battery may further include a housing cover configured to cover the open portion.

The housing cover may be fixed to the battery housing with a sealing gasket interposed therebetween.

The housing coupling portion may be interposed and fixed between the sealing gasket and the beading portion.

The second electrode tab may be electrically connected to a terminal provided at the other axial side of the battery housing.

In another aspect of the present disclosure, there is also provided a cylindrical battery, which includes an electrode assembly having a first electrode tab and a second electrode tab; a battery housing configured to accommodate the electrode assembly through an open portion formed at one side; and a current collector configured to electrically connect the first electrode tab and the battery housing by contacting the first electrode tab and an inner circumference of the battery housing, the current collector including a loop-shaped portion configured to surround a periphery of a central axis of the electrode assembly on the exposed surface of the first electrode tab to define an opening region that exposes the first electrode tab, a tab coupling portion configured to extend toward the opening region from an inner side of the loop-shaped portion adjacent to the opening region and coupled with the first electrode tab exposed through the opening region, and a housing coupling portion configured to extend toward the inner circumference of the battery housing from an outer side of the loop-shaped portion and coupled with the battery housing; a housing cover configured to cover the open portion; and a terminal electrically connected to the second electrode tab through the battery housing at a side opposite to the open portion.

The loop-shaped portion may include a plurality of first portions disposed to be spaced apart along a circumferential direction at a first radial location of the exposed region of the first electrode tab; a plurality of second portions disposed between first portions adjacent in the circumferential direction at a second radial location outside the first radial location; and a third portion configured to define a space where the tab coupling portion extends by connecting the first portions adjacent in the circumferential direction and the second portion located therebetween.

The tab coupling portion may extend from the second portion in a centripetal direction of the electrode assembly.

A gap may be provided between the tab coupling portion and the third portion.

The tab coupling portion may extend in a linear shape, an arc shape, or a combined shape thereof. Similarly, the third portion may extend in a linear shape, an arc shape, or a combined shape thereof. Similarly, the gap may extend in a linear shape, an arc shape, or a combined shape thereof.

The opening region may extend radially from a center of the electrode assembly.

A distance from the inner side of the loop-shaped portion to an edge of a winding hole of the electrode assembly may be greater than or equal to a length of the tab coupling portion.

An open portion may be provided in one axial side of the battery housing, and the housing coupling portion may be connected to the inner circumference of the battery housing in which the open portion is provided.

The housing coupling portion may be connected to an inner circumference of a beading portion provided near the open portion of the battery housing and depressed in a centripetal direction.

The cylindrical battery according to the present disclosure may further comprise a housing cover configured to cover the open portion; and a sealing gasket interposed between the housing cover and the battery housing, and the housing coupling portion may be interposed and fixed between the sealing gasket and the beading portion.

A winding hole may be provided at a center of the electrode assembly, and a current collector hole facing the winding hole may be provided at a center of the loop-shaped portion.

The tab coupling portion and the housing coupling portion may be connected via the loop-shaped portion. The tab coupling portion may extend in a centripetal direction from the second portion, and the housing coupling portion may extend in a centrifugal direction from the first portion.

The loop-shaped portion may form a closed loop. Optionally, the loop-shaped portion may have one or more cut portions.

The housing coupling portion may include a contact portion coupled to the inner circumference of the battery housing; and a connection portion configured to connect the contact portion and the loop-shaped portion.

The contact portion may extend in a direction corresponding to the circumferential direction of the inner circumference of the battery housing.

The connection portion may extend in a centrifugal direction and an axial direction.

The connection portion may have at least one bending portion. The bending portion may protrude in a centripetal direction or an axis direction of the electrode assembly.

Meanwhile, in another aspect of the present disclosure, there is also provided a battery pack, comprising a plurality of cylindrical batteries according to an embodiment of the present disclosure as described above.

In another aspect of the present disclosure, there is also provided a vehicle, comprising the cylindrical battery according to an embodiment of the present disclosure

### Advantageous Effects

According to the present disclosure, the resistance may be greatly reduced in electrically connecting the electrode assembly and the battery housing.

In addition, according to the present disclosure, the coupling force of the coupling portion between the current collector and the battery housing may be improved.

Moreover, according to the present disclosure, the energy density of a cylindrical battery may be improved.

In addition, according to the present disclosure, in manufacturing a cylindrical battery, the convenience of the welding process for electrically connecting the battery housing and the current collector is increased, thereby improving productivity.

In addition, according to the present disclosure, even if vibration and impact are applied while the battery is being used, the possibility of damage to the welding portion between the current collector and the electrode assembly and/or the welding portion between the current collector and the battery housing may be greatly reduced.

These and other effects of the present disclosure will be described together with the detailed description of the embodiments of the present disclosure.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a cross-sectional view showing the internal structure of a cylindrical battery according to an embodiment of the present disclosure.
FIG. 2 is a diagram showing a current collector according to an embodiment of the present disclosure.
FIG. 3 is a diagram showing a current collector according to another embodiment of the present disclosure.
FIG. 4 is a cross-sectional view showing the internal structure of a cylindrical battery according to another embodiment of the present disclosure.
FIG. 5 is a diagram showing a current collector according to still another embodiment of the present disclosure.
FIG. 6 is a cross-sectional view showing the internal structure of a cylindrical battery according to still another embodiment of the present disclosure.
FIG. 7 is a diagram showing a current collector according to still another embodiment of the present disclosure.
FIGS. 8 to 10 are side views showing housing coupling portions of the current collector according to an embodiment of the present disclosure, respectively.
FIG. 11 is a diagram showing a current collector according to still another embodiment of the present disclosure.
FIG. 12 is a diagram showing a current collector according to still another embodiment of the present disclosure.
FIG. 13 and 14 are side views showing housing coupling portions of the current collector according to still another embodiment of the present disclosure, respectively.
FIG. 15 is a diagram showing a current collector according to still another embodiment of the present disclosure.
FIG. 16 is a diagram showing a current collector according to still another embodiment of the present disclosure.
FIG. 17 is a plan view showing the current collector of FIG. 16.
FIG. 18 is a plan view showing a modified example of the current collector of FIG. 16.
FIG. 19 is a diagram showing a battery pack according to an embodiment of the present disclosure.
FIG. 20 is a diagram showing a vehicle according to an embodiment of the present disclosure.

### BEST MODE

The above-described objects, features and advantages will be described in detail with reference to the accompanying drawings, and accordingly, those skilled in the art will easily practice the technical aspect of the present disclosure. In describing the present disclosure, when it is determined that a certain detailed description of relevant known technology may make the subject matter of the present disclosure unnecessarily obscure, the detailed description is omitted. Hereinafter, an exemplary embodiment according to the present disclosure will be described in detail with reference to the accompanying drawings. In the drawings, identical reference numerals are used to indicate identical or similar elements.

The terms "first", "second" and the like are used to describe various elements, and these elements are not limited by the terms. These terms are used to distinguish one element from another, and unless the context clearly indicates otherwise, a first element may be a second element.

In the specification, unless the context clearly indicates otherwise, each element may be singular or plural.

Hereinafter, it will be understood that an element is referred to as being "above (or under)" or "on (or below)" another, it can be on an upper surface (or a lower surface) of the other element and intervening elements may be present between the element and the other element on (or below) the element.

Additionally, it will be further understood that when an element is referred to as being "connected to", "coupled to" or "joined to" another element, it can be directly connected or joined to the other element, or intervening elements may be present, or each element may be "connected to", "coupled to" or "joined to" each other through another element.

As used herein, the singular forms include the plural forms as well unless the context clearly indicates otherwise. It should be interpreted that the terms "comprises" or "comprising", when used in this specification, specifies the presence of stated elements or steps, but does not preclude the presence or addition of one or more other elements or steps.

Additionally, the singular forms as used herein include the plural forms as well unless the context clearly indicates otherwise. It should be interpreted that the terms "comprises" or "comprising", when used in this specification, specifies the presence of stated elements or steps, but does not preclude the presence or addition of one or more other elements or steps.

In the specification, unless the context clearly indicates otherwise, "A and/or B" represents either A or B or both, and "C to D" represents C or more and D or less.

For convenience of description, a direction that goes along a longitudinal direction of a winding axis of an electrode assembly wound in a jelly-roll shape is herein referred to as an axis direction Y. Additionally, a direction around the winding axis is herein referred to as a circumferential or peripheral direction X. Additionally, a direction that gets closer to or faces away from the winding axis is referred to as a radial direction Z. Among them, in particular, the direction that gets closer to the winding axis is referred to as a centripetal direction, and the direction that faces away from the winding axis is referred to as a centrifugal direction.

Hereinafter, a preferred embodiment of the present disclosure will be described with reference to the accompanying drawings.

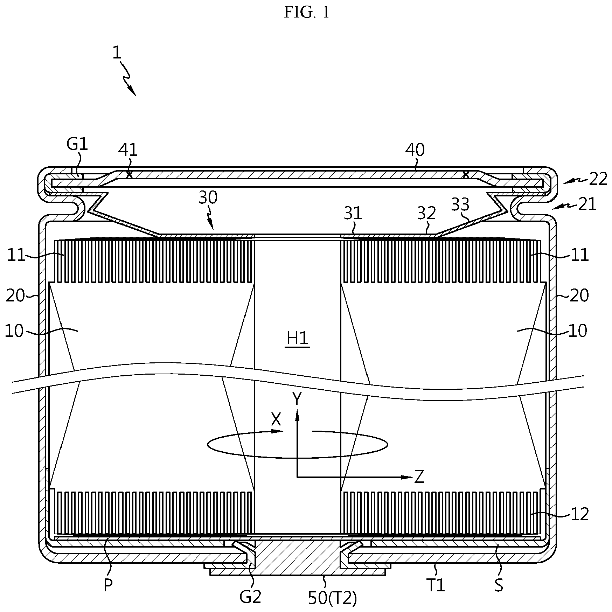

Referring to FIG. 1, a cylindrical battery 1 according to an embodiment of the present disclosure includes an electrode assembly 10, a battery housing 20, a current collector (first current collector) 30, a housing cover 40, and a terminal 50. The cylindrical battery 1 may further include a sealing gasket G1 and/or an insulating gasket G2 and/or a current collector (second current collector) P and/or an insulator S.

The electrode assembly 10 includes a first electrode tab 11 and a second electrode tab 12.

More specifically, the electrode assembly 10 may be manufactured by winding a stack, which is formed by sequentially stacking a first electrode, a first separator, a second electrode, and a second separator at least once, in a circumferential direction (X direction) around the Y axis. That is, the electrode assembly 10 applied to the present disclosure may be a jelly-roll type electrode assembly. In this case, the first separator and/or the second separator may be provided on the outer circumference of the electrode assembly 10 to insulate the electrode assembly 10 from the battery housing 20, or an additional separator or insulating film may be provided.

The first electrode includes a first electrode current collector and a first electrode active material coated on one surface or both surfaces of the first electrode current collector. An uncoated portion on which the first electrode active material is not coated is present at one end of the first electrode current collector in the width direction (a direction parallel to the height direction of the cylindrical battery 1 shown in FIG. 1). The uncoated portion is exposed and extended to the outside of the first and second separators and functions as a first electrode tab 11. The first electrode tab 11 is provided to the upper portion of the electrode assembly 10 accommodated in the battery housing 20 in the height direction (a direction parallel to the height direction of the cylindrical battery 1 shown in FIG. 1). The first electrode tab 11 may be, for example, a negative electrode tab.

The second electrode includes a second electrode current collector and a second electrode active material coated on one surface or both surfaces of the second electrode current collector. An uncoated portion on which the second electrode active material is not coated is present at the other end of the second electrode current collector in the width direction (a direction parallel to the height direction of the cylindrical battery 1 shown in FIG. 1). The uncoated portion is exposed and extended to the outside of the first and second separators and functions as a second electrode tab 12. The second electrode tab 12 is provided to the lower portion in the height direction of the electrode assembly 10 accommodated in the battery housing 20. The second electrode tab 12 may be, for example, a positive electrode tab.

In the present disclosure, a positive electrode active material coated on a positive electrode current collector included in the positive electrode and a negative electrode active material coated on a negative electrode current collector included in the negative electrode may employ any active material known in the art without limitation.

In one example, the positive electrode active material may include an alkali metal compound expressed by a general formula A[AₓM_{y}]O_{2+z} (A includes at least one element among Li, Na and K; M includes at least one element selected from is Ni, Co, Mn, Ca, Mg, Al, Ti, Si, Fe, Mo, V, Zr, Zn, Cu, Al, Mo, Sc, Zr, Ru, and Cr; 0 ≤ x, 1 ≤ x+y ≤ 2, -0.1 ≤ z ≤ 2; and the stoichiometric coefficients x, y and z are selected so that the compound maintains electrical neutrality).

In another example, the positive electrode active material may be an alkali metal compound xLiM¹O₂-(1-x)Li₂M²O₃ disclosed in US6,677,082, US6,680,143, et al., wherein M¹ includes at least one element having an average oxidation state 3; M² includes at least one element having an average oxidation state 4; and 0 ≤ x ≤ 1).

In still another example, the positive electrode active material may be lithium metal phosphate expressed by a general formula LiₐM¹ₓFe₁₋ₓM²_{y}P_{1-y}M³_{z}O_{4-z} (M¹ includes at least one element selected from the Ti, Si, Mn, Co, Fe, V, Cr, Mo, Ni, Nd, Al, Mg and Al; M² includes at least one element selected from Ti, Si, Mn, Co, Fe, V, Cr, Mo, Ni, Nd, Al, Mg, Al, As, Sb, Si, Ge, V and S; M³ includes a halogen element optionally including F; 0 < a ≤2, 0 ≤ x ≤ 1, 0 ≤ y < 1, 0 ≤ z < 1; the stoichiometric coefficient a, x, y and z are selected so that the compound maintains electrical neutrality), or Li₃M₂(PO₄)₃ [M includes at least one element selected from Ti, Si, Mn, Fe, Co, V, Cr, Mo, Ni, Al, Mg and Al].

Preferably, the positive electrode active material may include primary particles and/or secondary particles in which the primary particles are aggregated.

In one example, the negative electrode active material may employ carbon material, lithium metal or lithium metal compound, silicon or silicon compound, tin or tin compound, or the like. Metal oxides such as TiO₂ and SnO₂ with a potential of less than 2V may also be used as the negative electrode active material. As the carbon material, low-crystalline carbon, high-crystalline carbon or the like may be used.

The separator may employ a porous polymer film, for example, a porous polymer film made of a polyolefin-based polymer such as ethylene homopolymer, propylene homopolymer, ethylene/butene copolymer, ethylene/hexene copolymer, ethylene/methacrylate copolymer, or the like, or laminates thereof. As another example, the separator may employ a common porous nonwoven fabric, for example, a nonwoven fabric made of high melting point glass fiber, polyethylene terephthalate fiber, or the like.

At least one surface of the separator may include a coating layer of inorganic particles. It is also possible that the separator itself is made of a coating layer of inorganic particles. The particles constituting the coating layer may have a structure coupled with a binder so that interstitial volumes exist among adjacent particles.

The inorganic particles may be made of an inorganic material having a dielectric constant of 5 or more. The inorganic particles may include at least one material selected from the group consisting of Pb(Zr,Ti)O₃ (PZT), Pb₁₋ₓLaₓZr_{1-y}Ti_{y}O₃ (PLZT), PB(Mg₃Nb_{2/3})O₃, PbTiO₃ (PMN-PT), BaTiO₃, hafnia (HfO₂), SrTiO₃, TiO₂, Al₂O₃, ZrO₂, SnO₂, CeO₂, MgO, CaO, ZnO and Y₂O₃.

The cylindrical battery 1 may include an electrolyte. The electrolyte may be a salt having a structure of A⁺B⁻. Here, A⁺ includes an alkali metal cation such as Li⁺, Na⁺, K⁺ or a combination thereof. B⁻ includes at least one anion selected from the group consisting of F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, BF₂C₂O₄⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

The electrolyte may be used by dissolving in an organic solvent. The organic solvent may include at least one of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC) or γ-butyrolactone.

The battery housing 20 is a substantially cylindrical receptor having an open portion formed in one side thereof, and is made of a conductive metal material. In one example, the battery housing 20 may be made of steel or aluminum, but the present disclosure is not limited thereto. A side surface of the battery housing 20 and a lower surface (a lower surface based on FIG. 1) located opposite to the open portion are integrally formed. That is, the battery housing 20 has an open upper end and a closed lower end in its height direction. The side wall and the bottom of the battery housing 20 may be molded integrally by drawing a sheet metal with a press.

The lower surface of the battery housing 20 may have a substantially flat shape. The battery housing 20 accommodates the electrode assembly 10 through the open portion formed in one side in the height direction. The battery housing 20 may also accommodate an electrolyte through the open portion.

The battery housing 20 may have a beading portion 21 formed at an upper end thereof.

The battery housing 20 may further include a crimping portion 22 formed above the beading portion 21. The beading portion 21 has a shape in which the periphery of the outer circumference of the battery housing 20 is press-fitted to a predetermined depth in the centripetal direction. The beading portion 21 is formed in the upper portion of the electrode assembly 10. The inner diameter of the battery housing 20 in the region where the beading portion 21 is formed is smaller than the diameter of the electrode assembly 10.

The beading portion 21 provides a support surface on which the housing cover 40 may be seated. In addition, the beading portion 21 may provide a support surface on which at least a part of the edge periphery of the current collector 30, explained later, may be seated and coupled. That is, on the upper surface of the beading portion 21, at least a part of the edge periphery of the current collector 30 of the present disclosure and/or the edge periphery of the housing cover 40 of the present disclosure may be seated. As shown in FIG. 1, in order to stably support at least a part of the edge periphery of the current collector 30 and/or the edge periphery of the housing cover 40, at least a part of the upper surface of the beading portion 21 may have a shape extending along a direction substantially parallel to the lower surface of the battery housing 20, namely along a direction substantially perpendicular to the sidewall of the battery housing 20.

The crimping portion 22 is formed in the upper portion of the beading portion 21. The crimping portion 22 has a shape extended and bent to surround the edge periphery of the housing cover 40 disposed above the beading portion 21. Due to the shape of the crimping portion 22, the housing cover 40 is fixed on the beading portion 21. Of course, it is also possible that the crimping portion 22 is omitted and the housing cover 40 is fixed while covering the open portion of the battery housing 20 through another fixing structure.

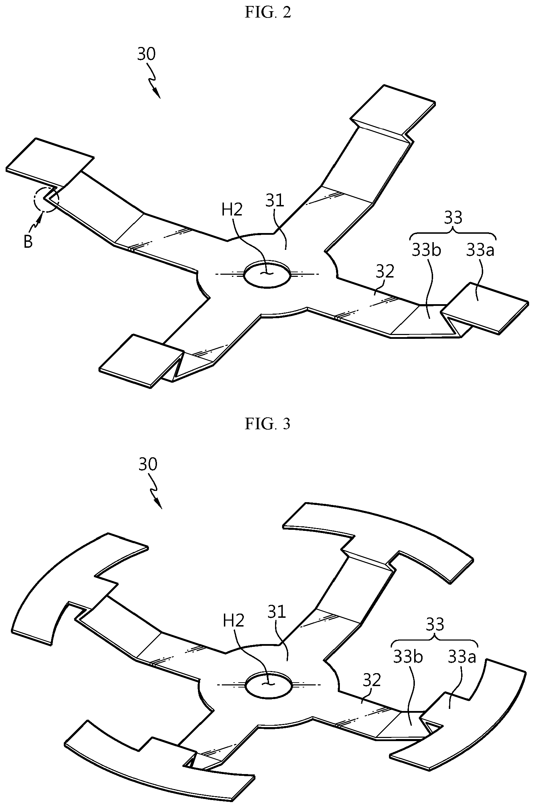

Next, referring to FIGS. 2 and 3, the current collector (first current collector) 30 according to an embodiment of the present disclosure will be described in detail.

First, referring to FIG. 2, the current collector 30 according to an embodiment of the present disclosure is accommodated inside the battery housing 20 and is electrically connected to the electrode assembly 10 and also electrically connected to the battery housing 20. That is, the current collector 30 electrically connects the electrode assembly 10 and the battery housing 20.

Preferably, at least a part of the current collector 30 is in surface-to-surface contact with the first electrode tab 11 of the electrode assembly 10, and at least another part of the current collector 30 is in surface-to-surface contact with the inner circumference of the battery housing 20.

The current collector 30 includes a loop-shaped portion 31, at least one tab coupling portion 32 extending from the loop-shaped portion 31 and coupled to the first electrode tab 11, and at least one first housing coupling portion 33 extending from an end of the tab coupling portion 32 and coupled to the inner circumference of the battery housing 20.

The number of the tab coupling portion 32 and the first housing coupling portion 33 may be one or two or more, and preferably, three to six coupling portions may be arranged at equal intervals along the peripheral direction.

The loop-shaped portion 31 and at least one tab coupling portion 32 are disposed at the upper portion of the electrode assembly 10, and may be located below the beading portion 21 when the beading portion 21 is formed in the battery housing 20.

The loop-shaped portion 31 may be provided at the center portion of the current collector 30. Accordingly, the loop-shaped portion 31 may be referred to as a central portion.

The loop-shaped portion 31 has a current collector hole H2 formed at a position corresponding to the winding hole H1 formed in the center of the electrode assembly 10. The winding hole H1 and the current collector hole H2 communicating with each other may function as a passage for laser irradiation or inserting a welding rod for welding the terminal 50, explained later, and the current collector (second current collector) P or welding the terminal 50 and a lead tab (not shown).

The loop-shaped portion 31 may have a substantially circular plate shape. For example, referring to FIG. 2, the loop-shaped portion 31 may have a ring-shaped plate having a current collector hole H2 at its center.

The at least one tab coupling portion 32 may have a shape extending substantially radially toward the inner wall of the battery housing 20 from the loop-shaped portion 31 of the current collector 30. The tab coupling portion 32 may be provided in plurality, for example. For example, referring to FIG. 2, the plurality of tab coupling portions 32 may be spaced apart from each other along the periphery of the loop-shaped portion 31. In this way, since the cylindrical battery 1 of the present disclosure includes a plurality of tab coupling portions 32, the coupling area with the first electrode tab 11 may be increased. Accordingly, the coupling force between the first electrode tab 11 and the tab coupling portion 32 may be secured and the electrical resistance may be reduced.

An end of the tab coupling portion 32 in the lengthwise direction may be positioned further inward than an innermost side of the beading portion 21 formed in the battery housing 20. More specifically, a boundary region between the tab coupling portion 32 and the first housing coupling portion 33 may be located further inward in a direction toward the winding hole H1 than the innermost side of the beading portion 21 formed in the battery housing 20. According to this structure, it is possible to prevent damage to the coupled portion between parts that may occur due to excessive bending of the current collector 30 to place the end of the first housing coupling portion 33 on the beading portion 21.

Meanwhile, not only the tab coupling portion 32 but also the loop-shaped portion 31 may be coupled with the first electrode tab 11 in order to secure the coupling force and reduce the electrical resistance by increasing the coupling area between the current collector 30 and the electrode assembly 10. An end of the first electrode tab 11 may be formed in a bent shape to be parallel to the tab coupling portion 32. If the end of the first electrode tab 11 is formed in this way and coupled to the tab coupling portion 32 in a state of being bent in parallel with the tab coupling portion 32, the coupling area is increased to obtain an effect of improving the coupling force and reducing the electrical resistance, and also the energy density may be improved by minimizing the total height of the electrode assembly 10.

The at least one first housing coupling portion 33 may extend from the end of the tab coupling portion 32 and be coupled to the inner circumference of the battery housing 20. For example, the at least one first housing coupling portion 33 may have a shape extending from the end of the tab coupling portion 32 toward the inner wall of the battery housing 20. The first housing coupling portion 33 may be provided, for example, in plurality. For example, referring to FIG. 2, the plurality of first housing coupling portions 33 may be spaced apart from each other along the periphery of the loop-shaped portion 31. Referring to FIG. 1, the plurality of first housing coupling portions 33 may be coupled to the beading portion 21 in the inner circumference of the battery housing 20. As shown in FIG. 1, as the upper surface of the beading portion 21 has a shape extending in a direction substantially parallel to the lower surface of the battery housing 20, namely in a direction substantially perpendicular to the sidewall of the battery housing 20, and the first housing coupling portion 33 also has a shape extending in the same direction, the first housing coupling portion 33 may be in stable contact on the beading portion 21. In addition, since the first housing coupling portion 33 is in stable contact with the beading portion 21, the two components may be welded smoothly, thereby improving the coupling force between the two components and minimizing the increase in resistance in the coupling portion. In addition, the distance between the current collector 30 and the beading portion 21 may be reduced by the structure in which the current collector 30 is coupled on the beading portion 21 of the battery housing 20 instead of the inner circumference of the cylindrical portion of the battery housing 20. Therefore, the dead space inside the battery housing 20 is minimized, so the energy density of the cylindrical battery 1 may be improved.

Referring to FIG. 2, the first housing coupling portion 33 includes a contact portion 33a coupled to the inner circumference of the battery housing 20 and a connection portion 33b for connecting the tab coupling portion 32 and the contact portion 33a.

The contact portion 33a is coupled to the inner circumference of the battery housing 20. In the case where the beading portion 21 is formed on the battery housing 20, the contact portion 33a may be coupled on the beading portion 21 as described above. In this case, as described above, for stable contact and coupling, both the beading portion 21 and the contact portion 33a have a shape extending in a direction substantially parallel to the lower surface of the battery housing 20, namely in a direction substantially perpendicular to the sidewall of the battery housing 20.

Referring to FIG. 2, the connection portion 33b may include at least one bending portion B whose extension direction is changed between the loop-shaped portion 31 and the contact portion 33a. That is, the connection portion 33b may have, for example, a spring-like structure or bellows-like structure capable of contraction and extension within a certain range. In the structure of the connection portion 33b, even if the height deviation of the electrode assembly 10 exists within a certain range, the contact portion 33a may be in close contact with the beading portion 21 in the process of accommodating the electrode assembly 10 to which the current collector 30 is coupled within the battery housing 20.

In the drawing of the present disclosure, only the case where one bending portion B is provided is shown, but the present disclosure is not limited thereto, and a plurality of bending portions B may be provided.

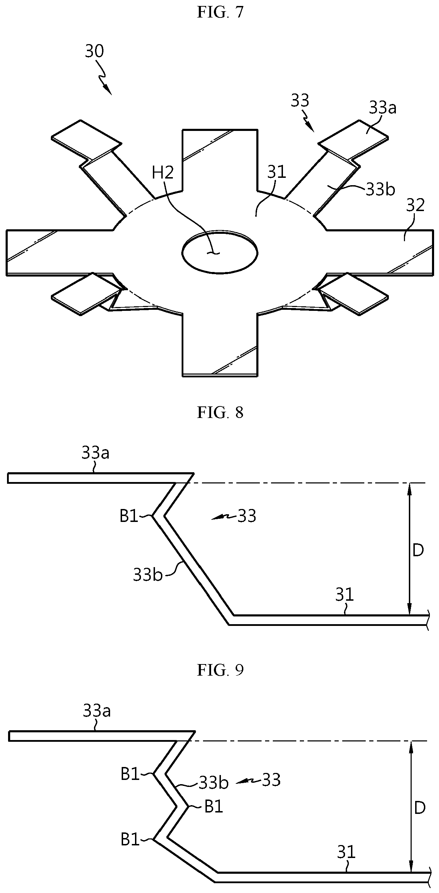

For example, the vertical distance D (FIGS. 8 to 10) between the contact portion 33a and the loop-shaped portion 31 in a state where no external force is applied to the current collector 30 and no deformation occurs is the same as the vertical distance between the upper surface of the beading portion 21 and the loop-shaped portion 31 in a state where the electrode assembly 10 to which the current collector 30 is coupled is seated within the battery housing 20 or preferably smaller within the extendable range of the connection portion 33b. If the connection portion 33b is configured to satisfy the above conditions, when the electrode assembly 10 to which the current collector 30 is coupled is seated within the battery housing 20, the contact portion 33a may be naturally brought into close contact with the beading portion 21 by the weight of the electrode assembly 10.

Moreover, even if the electrode assembly 10 moves up and down due to vibration and/or impact occurring in the use of the cylindrical battery 1 (see FIG. 1), the structure capable of contraction and extension of the connection portion 33b alleviates the impact caused by the movement of the electrode assembly 10 within a certain range.

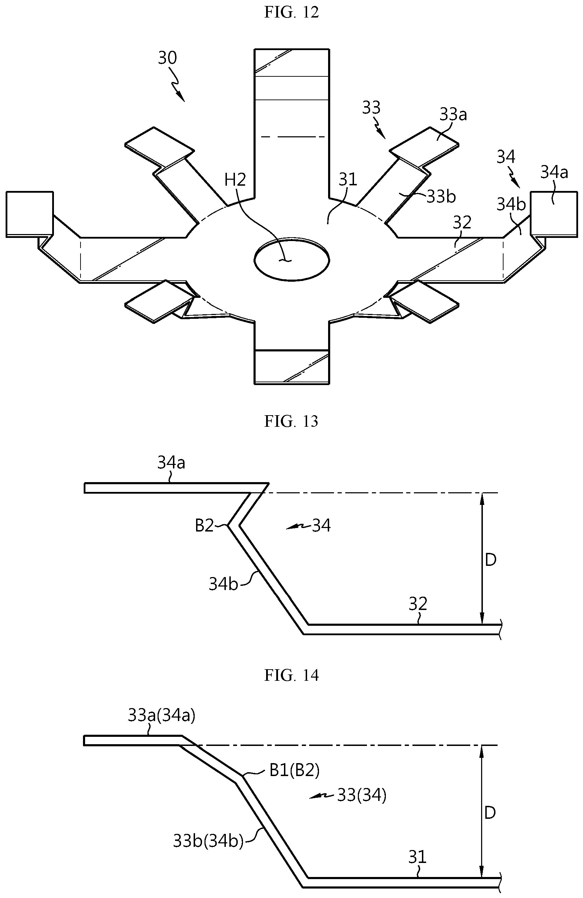

Meanwhile, in the case where the connection portion 33b includes only one bending portion B, the bending portion B may protrude in a direction toward the winding center of the electrode assembly 10, namely in the centripetal direction, unlike shown in the drawing (see FIG. 13). Such bending direction of the connection portion 33b is to prevent damage from being applied to the coupling portion of the current collector (first current collector) 30 and the electrode assembly 10 and/or the coupling portion of the current collector (first current collector) 30 and the battery housing 20 during the sizing process. The sizing process is a compression process for reducing the height occupied by the beading portion 21 of the battery housing 20 in order to reduce the total height of the cylindrical battery 1 in manufacturing the cylindrical battery 1. As a result of checking the degree of damage to the welded portion after performing the sizing process while changing the protruding direction of the bending portion B, it is found that almost no damage occurs in the cylindrical battery 1 having the structure in which the connection portion 33b is bent so that the bending portion B protrudes in the centripetal direction of the electrode assembly 10.

Next, referring to FIG. 3, a current collector 30 according to another embodiment of the present disclosure is shown. The current collector 30 according to another embodiment of the present disclosure has a difference in the shape of the contact portion 33a, compared to the current collector 30 of FIG. 2 described above, and except for the shape of the contact portion 33a, the structure of the current collector 30 described above may be applied substantially in the same way.

Referring to FIG. 3, at least a part of the contact portion 33a may extend along the inner circumference of the battery housing 20. For example, the contact portion 33a may have an arc shape extending in the circumferential direction along the beading portion of the battery housing 20. In addition, although not shown in the drawing, in order to maximize the contact area, the current collector 30 may be configured such that the sum of the extended lengths of each contact portion 33a of the at least one first housing coupling portion 33 measured along the outermost edge of the contact portion 33a is approximately equal to the inner circumferential length of the battery housing 20. Accordingly, there may be an effect of improving the coupling force and reducing the electrical resistance due to maximization of the coupling area.

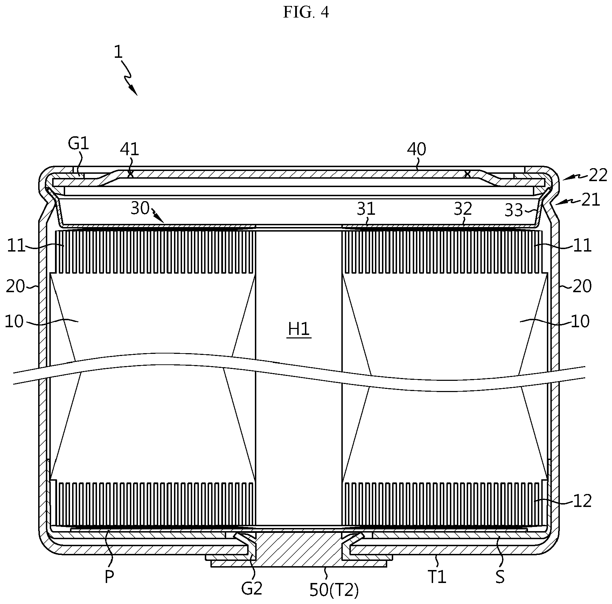

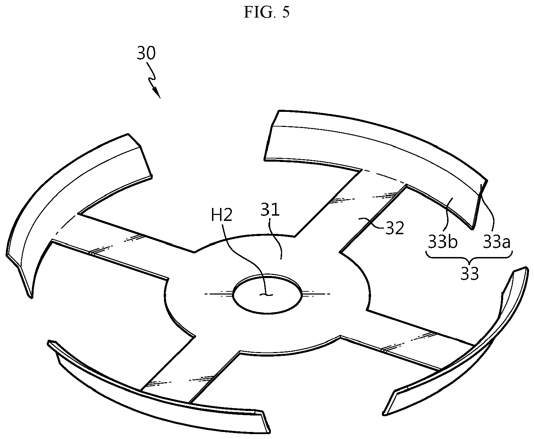

Next, referring to FIGS. 4 and 5, a current collector 30 according to still another embodiment of the present disclosure is shown. Compared to the current collector 30 of FIG. 3, the current collector 30 according to still another embodiment of the present disclosure has a difference only in the shape of the connection portion 33b, and except for the shape of the connection portion 33b, the structure of the current collector 30 described above may be applied substantially in the same way.

Referring to FIGS. 4 and 5, at least a part of the connection portion 33b may have a shape extending in the circumferential direction along the inner circumference of the battery housing 20. For example, the contact portion 33a may have an arc shape extending in the circumferential direction along the inner circumference of the beading portion of the battery housing 20, and the connection portion 33b may also have an arc shape extending along the circumferential direction in a state of being connected to the contact portion 33a. According to this structure, since the area of the current collector 30 is additionally increased compared to the current collector 30 shown in FIG. 3, the effect of reducing electrical resistance may be maximized. Meanwhile, referring to FIG. 5, the current collector 30 may not include a bending portion B, unlike the current collector 30 shown in FIGS. 1 to 3. If the bending portion B is not provided in this way, raw materials required for manufacturing the current collector 30 may be reduced. Accordingly, the manufacturing cost of the current collector 30 may be saved.

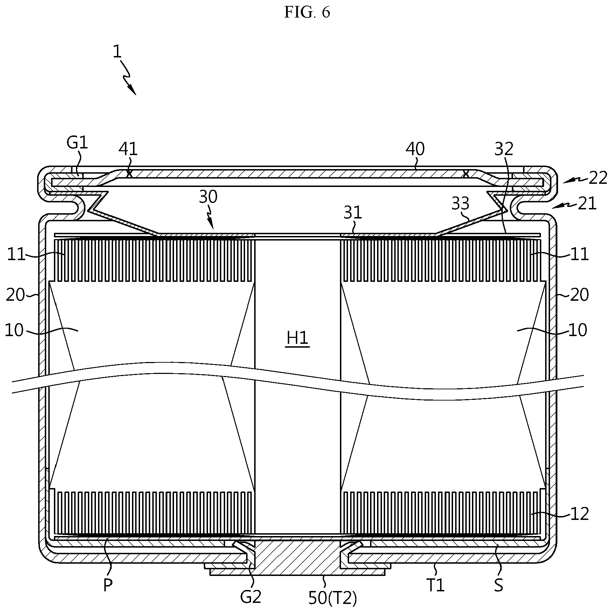

Hereinafter, the current collector 30 according to another embodiment of the present disclosure will be described with reference to FIGS. 6 to 15.

The current collector 30 includes a plurality of tab coupling portions 32 extending from the loop-shaped portion 31 and coupled to the first electrode tab 11, and a plurality of first housing coupling portions 33 extending from the loop-shaped portion 31 and coupled to the inner circumference of the battery housing 20. The tab coupling portion 32 and the first housing coupling portion 33 are indirectly connected through the loop-shaped portion 31 and are not directly connected to each other. Therefore, when an external impact is applied to the cylindrical battery 1 of the present disclosure, the possibility of damage to the coupling portion between the current collector 30 and the electrode assembly 10 and the coupling portion between the current collector 30 and the battery housing 20 may be minimized.

The loop-shaped portion 31 and the plurality of tab coupling portions 32 are disposed at the upper portion of the electrode assembly 10 and are located below the beading portion 21 when the beading portion 21 is formed in the battery housing 20.

The loop-shaped portion 31 has a current collector hole H2 formed at a position corresponding to the winding hole H1 formed in the center of the electrode assembly 10. The winding hole H1 and the current collector hole H2 communicating with each other may function as a passage for laser irradiation or inserting a welding rod for welding between the terminal 50, explained later, and the current collector (second current collector) P or welding between the terminal 50 and a lead tab (not shown).

The plurality of tab coupling portions 32 may have a shape extending substantially radially from the loop-shaped portion 31 of the current collector 30 toward the sidewall of the battery housing 20. The plurality of tab coupling portions 32 may be spaced apart from each other along the periphery of the loop-shaped portion 31. Meanwhile, not only the tab coupling portion 32 but also the loop-shaped portion 31 may be coupled with the first electrode tab 11 in order to secure coupling force and reduce electrical resistance by increasing the coupling area between the current collector 30 and the electrode assembly 10. An end of the first electrode tab 11 may be formed in a bent shape to be parallel to the tab coupling portion 32. If the end of the first electrode tab 11 is formed in this way and coupled to the tab coupling portion 32 in a state of being bent in parallel with the tab coupling portion 32, there is an effect of improving coupling force and reducing electrical resistance by increasing the coupling area, and also the energy density is improved by minimizing the total height of the electrode assembly 10.

The plurality of first housing coupling portions 33 may have a shape extending approximately radially from the loop-shaped portion 31 of the current collector 30 toward the inner wall of the battery housing 20. The plurality of first housing coupling portions 33 may be spaced apart from each other along the periphery of the loop-shaped portion 31. At least one first housing coupling portion 33 may be positioned between the tab coupling portions 32 adjacent to each other. The plurality of first housing coupling portions 33 may be coupled to, for example, the beading portion 21 in the inner circumference of the battery housing 20. The first housing coupling portion 33 may be particularly coupled to the upper surface of the beading portion 21. In the cylindrical battery 1 of the present disclosure, when this structure is applied, the first housing coupling portion 33 may be naturally seated on the beading portion 21 through a process of accommodating the electrode assembly 10 in a state where the current collector 30 is coupled into the battery housing 20. Therefore, the battery housing 20 and the current collector 30 may be welded smoothly. In addition, as the upper surface of the beading portion 21 has a shape extending along a direction substantially parallel to the lower surface of the battery housing 20, namely in a direction substantially perpendicular to the sidewall of the battery housing 20, and the first housing coupling portion 33 also extends along the same direction, the first housing coupling portion 33 may stably contact the beading portion 21. In addition, since the first housing coupling portion 33 is in stable contact on the beading portion 21, two components may be welded smoothly, thereby improving the coupling force between the two components and minimizing the increase in resistance in the coupling portion.

Next, the first housing coupling portion 33 includes a first contact portion 33a coupled to the inner circumference of the battery housing 20 and a first connection portion 33b for connecting the loop-shaped portion 31 and the first contact portion 33a.

The first contact portion 33a is coupled to the inner circumference of the battery housing 20. In the case where the beading portion 21 is formed in the battery housing 20, the first contact portion 33a may be coupled to the beading portion 21 as described above. In this case, as described above, for stable contact and coupling, both the beading portion 21 and the first contact portion 33a may have a shape extending in a direction substantially parallel to the lower surface of the battery housing 20, namely in a direction substantially perpendicular to the sidewall of the battery housing 20.

Referring to FIGS. 8 to 10, the first connection portion 33b may include at least one first bending portion B1 whose extension direction is changed between the loop-shaped portion 31 and the first contact portion 33a. That is, the first connection portion 33b may have a spring-like structure or bellows-like structure capable of contraction and extension within a certain range. In the structure of the connection portion 33b, even if the height deviation of the electrode assembly 10 exists within a certain range, the contact portion 33a may be in close contact with the beading portion 21 in the process of accommodating the electrode assembly 10 to which the current collector 30 is coupled within the battery housing 20 due to the weight of the electrode assembly 10.

For example, the vertical distance D between the first contact portion 33a and the loop-shaped portion 31 in a state where no external force is applied to the current collector 30 and there is no deformation is preferably equal to the vertical distance between the upper surface of the beading portion 21 and the loop-shaped portion 31 when the electrode assembly 10 in a state where the current collector 30 is coupled thereto is seated in the battery housing 20 or smaller within the extendable range of the first connection portion 33b. If the first connection portion 33b is configured to satisfy the above conditions, when the electrode assembly 10 to which the current collector 30 is coupled is seated in the battery housing 20, the first contact portion 33a may be naturally brought into close contact with the beading portion 21 due to the weight of the electrode assembly 10.

Moreover, even if the electrode assembly 10 moves up and down due to vibration and/or impact occurring in the use of the cylindrical battery 1 (see FIG. 1), the structure capable of contraction and extension of the first connection portion 33b alleviates the impact caused by the movement of the electrode assembly 10 within a certain range. That is, the structure capable of contraction and extension of the first connection portion 33b may act as a buffer so that impact is not transferred to the coupling portion between the first contact portion 33a and the battery housing 20 and the coupling portion between the tab coupling portion 32 and the first electrode tab 11.

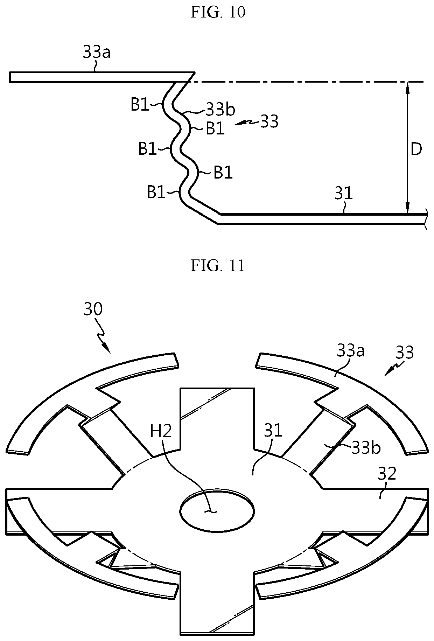

Next, referring to FIG. 11, a current collector 30 according to another embodiment of the present disclosure is shown. The current collector 30 according to another embodiment of the present disclosure has a difference only in the shape of the first contact portion 33a compared to the current collector 30 described above (the current collector exemplarily described with reference to FIG. 7), and except for the shape of the first contact portion 33a, the structure of the current collector 30 described above may be applied substantially in the same way.

At least a part of the first contact portion 33a may have a shape extending in an arc shape along the inner circumference of the battery housing 20. In this case, in order to maximize the contact area, the current collector 30 may be configured such that the sum of the extended lengths of each first contact portion 33a of the plurality of first housing coupling portions 33 measured along the outermost edge of the first contact portion 33a is approximately equal to the inner circumference of the battery housing 20.

Next, referring to FIG. 12, a current collector 30 according to still another embodiment of the present disclosure is shown. The current collector 30 according to still another embodiment of the present disclosure has a difference only in that a second housing coupling portion 34 is further included, compared to the current collectors 30 according to the previous embodiments (the current collectors exemplarily described with reference to FIGS. 7 and 11), and except for the second housing coupling portion 34, the structure of the current collectors 30 described above may be applied substantially in the same way.

The second housing coupling portion 34 extends from the end of the tab coupling portion 32 and is coupled to the inner circumference of the battery housing 20. The second housing coupling portion 34 is provided at an end of at least one of the plurality of the tab coupling portions 32. The second housing coupling portion 34 includes a second contact portion 34a coupled to the inner circumference of the battery housing 20 and a second connection portion 34b for connecting the loop-shaped portion 31 and the second contact portion 34a.

The second contact portion 34a is coupled to the inner circumference of the battery housing 20. In the case where the beading portion 21 is formed in the battery housing 20, the second contact portion 34a may be coupled onto the beading portion 21, like the first contact portion 33a described above. In this case, as described above, for stable contact and coupling, both the beading portion 21 and the second contact portion 34a may have a shape extending in a direction substantially parallel to the lower surface of the battery housing 20, namely in a direction substantially perpendicular to the sidewall of the battery housing 20.

Meanwhile, although not shown in the drawing, like the shape of the first contact portion 33a shown in FIG. 11, the second contact portion 34a may also have a shape in which at least a part thereof extends in an arc shape along the inner circumference of the battery housing 20. In this case, in order to maximize the contact area between the current collector 30 and the battery housing 20, the current collector 30 may be configured such that the sum of the extended lengths of each second contact portion 34a of the plurality of second housing coupling portion 34 measured along the outermost edge of the second contact portion 34a is approximately equal to the inner circumference of the battery housing 20.

Referring to FIGS. 13 and 14, like the first connection portion 33b described above, the second connection portion 34b may include at least one second bending portion B2 whose extension direction is changed between the tab coupling portion 32 and the second contact portion 34a. As the second bending portion B2 is formed, the second connection portion 34b has a structure capable of contraction and extension, and thus there is an advantage in the assembly process of the cylindrical battery 1 and a buffering effect, as described above. The second bending portion B2 may protrude in the centripetal direction of the electrode assembly 10 as shown in FIG. 13 or protrude in the central axis direction of the electrode assembly 10 as shown in FIG. 14.

In the drawing of the present disclosure, only the case where one second bending portion B2 is provided is shown, but the present disclosure is not limited thereto, and like the first connection portion 33b described above, the second bending portion B2 may also be provided in plurality.

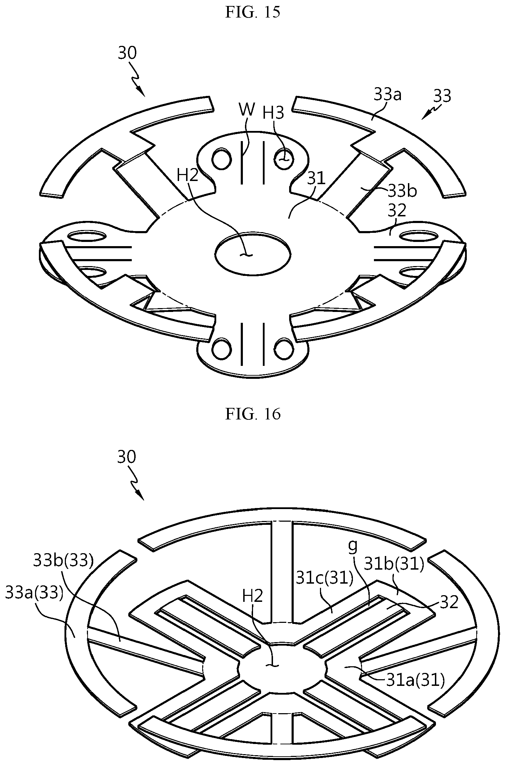

Referring to FIG. 15, the current collector (first current collector) 30 of the present disclosure may include at least one injection hole H3. The injection hole H3 may be provided in the tab coupling portion 32, for example. When the tab coupling portion 32 is provided in plurality, the injection hole H3 may be provided in at least one tab coupling portion 32. The injection hole H3 may be provided at one side or both sides of at least one welding line W formed on the tab coupling portion 32, for example.

In manufacturing the cylindrical battery 1 according to an embodiment of the present disclosure, an electrolyte solution may be injected after a coupled body including the electrode assembly 10 and the current collector (first current collector) 30 is accommodated in the battery housing 20. At this time, the injection property may be improved due to the injection hole H3.

Referring to FIG. 14, the first connection portion 33b of the first housing coupling portion 33 and/or the second connection portion 34b of the second housing coupling portion 34 of the present disclosure may have a shape bent once, and may have a shape bent in a direction different from that shown in FIGS. 8 and 13. That is, the first bending portion B1 formed on the first connection portion 33b and/or the second bending portion B2 formed on the second connection portion 34b may protrude in a direction toward the central axis of the cylindrical battery 1 (see FIG. 1). Such bending direction of the first connection portion 33b and/or the second connection portion 34b is to prevent damage to the coupling portion between the current collector (first current collector) 30 and the electrode assembly 10 and/or the coupling portion between the current collector (first current collector) 30 and the battery housing 20 during the sizing process. Sizing refers to a compression process for reducing the height occupied by the region of the beading portion 21 of the battery housing 20 in order to reduce the total height of the cylindrical battery 1, in manufacturing the cylindrical battery 1. As a result of checking the degree of damage to the welding portion after the sizing process while changing the protruding direction of the bending portions B1, B2, it is found that almost no damage occurred in the cylindrical battery 1 having a structure in which the bending portions B1, B2 protrude in the centripetal direction of the electrode assembly 10 or in a direction toward the central axis of the electrode assembly 10.

Hereinafter, another embodiment of the current collector usable for a cylindrical battery will be described with reference to FIGS. 16 to 18. The current collector 30 according to another embodiment may electrically connect the electrode assembly 10 and the battery housing 20 applied to the cylindrical battery 1.

The current collector 30 includes a loop-shaped portion 31 surrounding the periphery of the central axis of the electrode assembly 10 to define an opening region that exposes the first electrode tab 11 of the electrode assembly 10.

The loop-shaped portion 31 may include a portion extending in a radial direction as well as a portion extending in a peripheral direction. The loop-shaped portion 31 may include a plurality of first portions 31a extending in the circumferential direction at a first radial location of the exposed region of the first electrode tab 11, a plurality of second portions 31b disposed between first portions 31a adjacent in the circumferential direction at a second radial location outside the first radial location; and a third portion 31c defining a space where the tab coupling portion 32 extends by connecting the first portions 31a adjacent in the circumferential direction and the second portion 3 1b located therebetween. The third portion 31c may extend substantially in the radial direction, but the present disclosure is not limited thereto. The third portion 31c may be extended in a linear shape, or may be extended in an arc shape or a combined shape of the linear shape and the arc shape, unlike the drawing.

The first portion 31a, the second portion 31b, and the third portion 31c are in surface-to-surface contact with the first electrode tab 11. Accordingly, the contact area between the first electrode tab 11 of the electrode assembly 10 and the current collector 30 may be further increased.

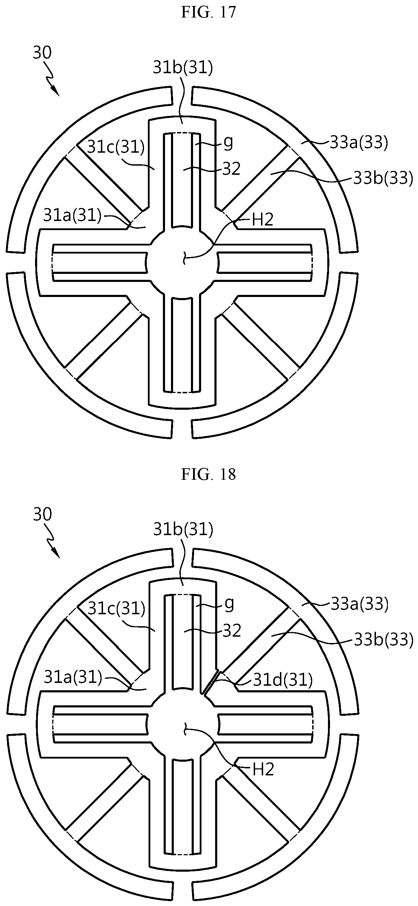

The loop-shaped portion 31 may have a closed loop shape surrounding the central axis of the electrode assembly 10 or the current collector hole H2 provided at a position corresponding thereto. As shown in FIG. 17, the closed loop shape may be a closed loop in which the first portion 31a, the second portion 31b, and the third portion 31c are completely connected.

Alternatively, the loop-shaped portion 31 may have a substantially loop shape. That is, as shown in FIG. 18, a cut portion 31d may be formed at a specific location of the first portion 31a. In this case, the loop-shaped portion 31 exactly has an open loop shape, but has a shape that can be recognized as a closed loop shape as a whole. It is obvious to those skilled in the art that the cut portion 31d may be formed not only on the first portion 31a but also on the second portion 31b and/or the third portion 31c.

The current collector 30 includes a tab coupling portion 32 connected to the loop-shaped portion 31. The tab coupling portion 32 may extend in the centripetal direction of the electrode assembly 10 from the second portion 31b. The tab coupling portion 32 may be extended in a linear shape, or may be extended in an arc shape or a combined shape of the linear shape and the arc shape, unlike shown in the drawing.

The tab coupling portion 32 may be disposed substantially on the same plane as the loop-shaped portion 31. A gap g may be provided between the tab coupling portion 32 and the third portion 31c. The gap g may be extended in a linear shape, or may be extended in an arc shape or a combined shape of the linear shape and the arc shape, unlike shown in the drawing.

Unlike the tab coupling portion 32 of another embodiment described above, the tab coupling portion 32 of this embodiment extends in the centripetal direction from the second portion 31b of the loop-shaped portion 31. That is, the tab coupling portion 32 may be disposed inside the opening region defined by the loop-shaped portion 31. The opening region may radially extend from the center of the electrode assembly 10, and the tab coupling portion 32 may also radially extend within the opening region.

A distance from the inner side of the loop-shaped portion 31 to an edge of the winding hole H1 of the electrode assembly 10 may be greater than or equal to the length of the tab coupling portion 32.

The tab coupling portion 32 may be coupled to the first electrode tab 11 of the electrode assembly 10 by welding or the like.

Optionally, the first portion 31a and/or the second portion 31b and/or the third portion 31c of the loop-shaped portion 31 may be coupled to the first electrode tab 11 by welding or the like.

In this way, each part of the loop-shaped portion 31 may be welded to the first electrode tab 11 as a whole or selectively.

Next, the current collector 30 includes a first housing coupling portion 33 connected to the first portion 3 1a of the loop-shaped portion 31.

The first housing coupling portion 33 may extend outward in a radial direction from the first portion 31a of the loop-shaped portion 31.

A radial outer end of the first housing coupling portion 33 may be coupled to the inner circumference of the battery housing 20.

A part where the first housing coupling portion 33 is connected to the loop-shaped portion 31 may be disposed further inward in the radial direction compared to a part where the tab coupling portion 32 is connected to the loop-shaped portion 31.

The tab coupling portion 32 and the first housing coupling portion 33 may be connected via the loop-shaped portion 31. That is, the tab coupling portion 32 is connected to the second portion 31b, and the first housing coupling portion 33 is connected to the first portion 31a. The tab coupling portion 32 and the first housing coupling portion 33 are connected to the loop-shaped portion 31 at different positions in the circumferential direction and are also connected to the loop-shaped portion 31 at different positions in the radial direction.

Accordingly, when vibration or impact is applied to the cylindrical battery, the vibration or impact transmitted through the first housing coupling portion 33 may be absorbed or buffered by the geometric shape of the loop-shaped portion 31. That is, since a gap exists between the third portion 31c of the loop-shaped portion 31 and the tab coupling portion 32, vibration or impact applied from the outside is transmitted to the tab coupling portion 32 through the third portion 31c. In this case, the vibration or impact may be alleviated since the path through which vibration or impact is transmitted is increased.

The first housing coupling portion 33 may include a first contact portion 33a in contact with the inner circumference of the battery housing 20 and a first connection portion 33b for connecting the first contact portion 33a and the loop-shaped portion 31. The first connection portion 33b is disposed more inward than the first contact portion 33a in the radial direction and disposed more outward than the first portion 31a of the loop-shaped portion 31 in the radial direction.

That is, the radial outer end of the first connection portion 33b may be connected to the first contact portion 33a, and the radial inner end of the first connection portion 33b may be connected to the first portion 31a of the loop-shaped portion 31.

The first contact portion 33a is provided at a radial outer end of the first housing coupling portion 33 and may extend in the circumferential direction. The first contact portion 33a may extend in both directions along a circumferential direction from the radial outer end of the first connection portion 33b.

The first contact portion 33a may form an arc shape. Preferably, the first contact portion 33a may have a shape corresponding to the inner circumference of the battery housing 20 and/or the beading portion 21 with which the first contact portion 33a comes into contact.

The curvature of the outermost edge of the first contact portion 33a having an arc shape may correspond to the curvature of the inner circumference of the battery housing 20.

The first connection portion 33b may extend in the radial direction and the axial direction of the electrode assembly 10. The first connection portion 33b may extend to be farther away from the electrode assembly in the axial direction as going outward in the radial direction.

The first connection portion 33b may extend straight.

The first connection portion may include one or more first bending portions described above, but in this embodiment, this is omitted and the first connection portion 33b having a simple form is illustrated.

Meanwhile, referring to FIGS. 1 and 6, the housing cover 40 covers the open portion formed at one side of the battery housing 20. The housing cover 40 may be fixed by the crimping portion 22 formed on the upper end of the battery housing 20. In this case, a sealing gasket G1 may be interposed between the battery housing 20 and the housing cover 40 to improve the fixing force and the sealing property of the battery housing 20. The housing cover 40 may not be a component that should function as a passage of current. Therefore, as long as the battery housing 20 and the housing cover 40 can be firmly fixed through welding or by applying another component and the sealing property of the open portion of the battery housing 20 can be secured, the application of the sealing gasket G1 is not essential.

Meanwhile, according to an embodiment in which the sealing gasket G1 is applied, the sealing gasket G1 may have a substantially ring shape surrounding an edge of the housing cover 40. The sealing gasket G1 may cover the upper surface, the lower surface and the outer circumference of the housing cover 40 at the same time.

In the sealing gasket G1, the radial length of a portion covering the lower surface of the housing cover 40 may be smaller than or equal to the radial length of a portion of the sealing gasket G1 that covers the upper surface of the housing cover 40. In the sealing gasket G1, if the radial length of the portion covering the lower surface of the housing cover 40 is too long, the sealing gasket G1 may pressurize the current collector 30 in the process of vertically compressing the battery housing 20, so the current collector 30 and/or the battery housing 20 may be deformed. Therefore, if the radial length of the portion of the sealing gasket G1 covering the lower surface of the housing cover 40 is designed to be small to a certain level, deformation of the current collector 30 and/or the battery housing 20 may be prevented. Specifically, as shown in FIGS. 1 and 6, the radial length of the portion of the sealing gasket G1 covering the lower surface of the housing cover 40 may be formed smaller than the radial length of the portion of the sealing gasket G1 covering the upper surface of the housing cover 40.

Meanwhile, the contact portion 33a may be interposed and fixed between the beading portion 21 of the battery housing 20 and the sealing gasket G1. That is, in a state where the contact portion 33a is interposed between the beading portion 21 of the battery housing 20 and the sealing gasket G1, the contact portion 33a may be fixed due to the crimping force of the crimping portion 22.

Alternatively, a welding portion may also be formed between the beading portion 21 of the battery housing 20 and the contact portion 33a of the current collector 30. For example, the contact portion 33a may not be securely fixed only by the crimping force. Further, when the sealing gasket G1 is shrunk by heat or the crimping portion 22 is deformed due to an external impact, the coupling force between the contact portion 33a of the current collector 10 and the battery housing 20 may be reduced. Therefore, the contact portion 33a may be fixed to the battery housing 20 through welding in a state where the contact portion 33a is placed on the beading portion 21 of the battery housing 20. After that, manufacturing of the cylindrical battery 1 may be completed by placing the housing cover 40 surrounded by the sealing gasket G1 on the upper end of the contact portion 33a and forming the crimping portion 22. At this time, as the welding method may employ, for example, laser welding, resistance welding, ultrasonic welding, or the like, but the welding method is not limited thereto.

The housing cover 40 may have a venting portion 41 formed to prevent an increase in internal pressure due to gas generated inside the battery housing 20. The venting portion 41 is formed in a part of the housing cover 40 and corresponds to a region structurally weaker than the surrounding region so as to be easily ruptured when an internal pressure is applied thereto. The venting portion 41 may be, for example, a region having a smaller thickness than the peripheral region.

The height of the housing cover 40 may be lower than the height of the crimping portion 22. In this case, the cylindrical battery 1 may be rotated by 180 degrees and mounted on a predetermined tray. Since there is a height difference between the housing cover 40 and the crimping portion 22, only the crimping portion 22 contacts the surface of the tray, and a gap exists between the housing cover 40 and the surface of the tray. The gap may provide a vent space when gas inside the battery housing 20 is vented.

The terminal 50 is electrically connected to the second electrode tab 12 of the electrode assembly 10 through the battery housing 20 at a side opposite to the open portion of the battery housing 20. The terminal 50 may penetrate an approximate center of the lower surface of the battery housing 20. The terminal 50 may be electrically connected to the electrode assembly 10 by, for example, being coupled to the current collector (second current collector) P coupled to the second electrode tab 12 or coupled to the lead tab (not shown) coupled to the second electrode tab 12. Therefore, the terminal 50 may have the same polarity as the second electrode of electrode assembly 10 and function as the second electrode terminal T2. When the second electrode tab 12 is a positive electrode tab, the terminal 50 may function as a positive electrode terminal. Considering the polarity and function of the terminal 50, the terminal 50 must remain insulated from the battery housing 20 having the opposite polarity. To this end, an insulating gasket G2 may be applied between the terminal 50 and the battery housing 20. Alternatively, the insulation may also be realized by coating a part of the surface of the terminal 50 with an insulating material.

For the same reason, the second electrode tab 12 and/or the current collector (second current collector) P must remain insulated from the battery housing 20. To this end, an insulator S may be interposed between the second electrode tab 12 and the battery housing 20 and/or between the current collector (second current collector) P and the battery housing 20. When the insulator S is applied, the terminal 50 may pass through the insulator S for electrical connection with the second electrode tab 12.

Meanwhile, in the present disclosure, the entire surface of the battery housing 20 may function as the first electrode terminal T1. For example, when the first electrode tab 11 is a negative electrode tab, the first electrode terminal T1 may be a negative electrode terminal. The cylindrical battery 1 according to the present disclosure has a structure in which the terminal 50 exposed on the lower surface located on a side opposite to the open portion of battery housing 20 and a region except for the area occupied by the terminal 50 among the lower surface of the battery housing 20 can be used as the second electrode terminal T2 and the first electrode terminal T1, respectively. Therefore, in the case of electrically connecting a plurality of cylindrical batteries 1 according to the present disclosure, both positive electrodes/negative electrodes can be connected in one direction, thereby simplifying the electrical connection structure. In addition, since the cylindrical battery 1 according to the present disclosure has a structure in which most of the lower surface located at a side opposite to the open portion of the battery housing 20 can be used as an electrode terminal, there is an advantage in that an enough area for welding a component for electrical connection can be secured.

In the present disclosure, the sealing gasket G1 and the insulating gasket G2 may be made of a polymer resin having insulation and elasticity property. In one example, the sealing gasket G1 and the insulating gasket G2 may be made of polypropylene, polybutylene terephthalate, polyfluorinated ethylene, or the like, but the present disclosure is not limited thereto.

Preferably, the cylindrical battery may be, for example, a cylindrical battery whose form factor ratio (defined as a value obtained by dividing the diameter of the cylindrical battery by height, namely a ratio of diameter (Φ) to height (H)) is greater than about 0.4.

Here, the form factor means a string of numbers indicating the diameter and height of a cylindrical battery. The cylindrical battery according to an embodiment of the present disclosure may be, for example, a 46110 battery, a 4875 battery, a 48110 battery, a 4880 battery, or a 4680 battery. In the numerical value representing the form factor, first two numbers indicate the diameter of the cylindrical battery, and the remaining numbers indicate the height of the cylindrical battery.

The battery according to an embodiment of the present disclosure may be a cylindrical battery having an approximately cylindrical shape with the diameter of approximately 46 mm, the height of approximately 110 mm and the ratio of form factor of approximately 0.418.

The battery according to another embodiment may be a cylindrical battery having an approximately cylindrical shape with the diameter of approximately 48 mm, the height of approximately 75 mm and the ratio of form factor of approximately 0.640.

The battery according to another embodiment may be a cylindrical battery having an approximately cylindrical shape with the diameter of approximately 48 mm, the height of approximately 110 mm and the ratio of form factor of approximately 0.436.

The battery according to another embodiment may be a cylindrical battery having an approximately cylindrical shape with the diameter of approximately 48 mm, the height of approximately 80 mm, and the ratio of form factor of approximately 0.600.

The battery according to another embodiment may be a cylindrical battery having an approximately cylindrical shape with the diameter of approximately 46 mm, the height of approximately 80 mm, and the ratio of form factor of approximately 0.575.

Conventionally, batteries having a form factor ratio of about 0.4 or less have been used. That is, conventionally, for example, 1865 battery, 2170 battery, etc. were used. The 1865 battery has a diameter of approximately 18 mm, height of approximately 65 mm, and a form factor ratio of 0.277. The 2170 battery has a diameter of approximately 21 mm, a height of approximately 70 mm, and a form factor ratio of 0.300.

In the cylindrical battery 1 according to the embodiment of the present disclosure, the housing cover 40 does not have a polarity. Instead, since the first current collector 30 is connected to the inner circumference of the battery housing 20, the outer surface of the bottom of the battery housing 20 has a polarity opposite to the terminal 50. Therefore, when connecting the plurality of cylindrical batteries 1 in series and/or parallel, wiring such as bus bar connection may be performed on one side of the cylindrical batteries 1 using the outer surface of the bottom of the battery housing 20 and the terminal 50. In the cylindrical battery 1, electrical wiring may be made using the terminal 50 and a flat surface therearound in a state where the terminal 50 faces upward and the housing cover 20 faces downward, unlike shown in the drawing. Through this, it is possible to improve energy density by increasing the number of cylindrical batteries that can be mounted in the same space.

The cylindrical battery 1 according to the above embodiment may be used to manufacture a battery pack.

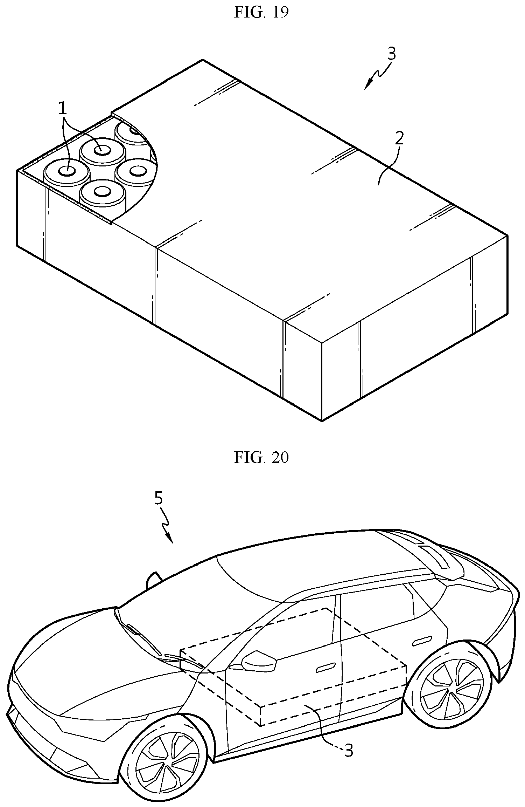

FIG. 19 is a diagram schematically showing a battery pack 3 according to an embodiment of the present disclosure.

Referring to FIG. 19, the battery pack 3 according to an embodiment of the present disclosure includes an aggregate in which cylindrical batteries 1 are electrically connected, and a pack housing 2 for accommodating the aggregate. The cylindrical battery 1 is the battery according to the above embodiment. In the drawing, components such as a bus bar for electrical connection of the cylindrical batteries 1, a cooling unit, and an external terminal are not depicted for convenience of illustration.

The battery pack 3 may be mounted to a vehicle. The vehicle may be, for example, an electric vehicle, a hybrid electric vehicle, or a plug-in hybrid vehicle. The vehicle includes a four-wheeled vehicle or a two-wheeled vehicle.

FIG. 20 is a diagram schematically showing a vehicle 50 including the battery pack 3 of FIG. 19.

Referring to FIG. 20, the vehicle 50 according to an embodiment of the present disclosure includes the battery pack 3 according to an embodiment of the present disclosure. The vehicle 50 operates by receiving power from the battery pack 3 according to an embodiment of the present disclosure.

It should be understood that the foregoing embodiments are illustrative in all respects and not restrictive, and the scope of the present disclosure will be indicated by the following claims rather than the foregoing detailed description. Also, the meaning and scope of the following claims as well as all the changes and transformable forms derived from the equivalent concept thereof should be interpreted as falling within the scope of the present disclosure.

Although the present disclosure has been hereinabove described with reference to the accompanying drawings, the present disclosure is not limited to the disclosed embodiments and the accompanying drawings, and it is obvious that a variety of modifications may be made thereto within the scope of the technical aspects of the present disclosure. Although the description of the embodiment of the present disclosure does not explicitly describe the effect by the operation of the element of the present disclosure, it is apparent that the predictable effect by the corresponding element should be acknowledged.

## Claims

1. A cylindrical battery, comprising:
an electrode assembly having a first electrode tab made of an uncoated portion and exposed at one side end thereof;
a battery housing configured to accommodate the electrode assembly; and
a current collector configured to electrically connect the first electrode tab and the battery housing by contacting the first electrode tab and an inner circumference of the battery housing,
wherein the current collector includes:
a loop-shaped portion configured to surround a periphery of a central axis of the electrode assembly to define an opening region that exposes the first electrode tab;
a tab coupling portion configured to extend toward the opening region from an inner side of the loop-shaped portion adjacent to the opening region and coupled with the first electrode tab exposed through the opening region; and
a housing coupling portion configured to extend toward the inner circumference of the battery housing from an outer side of the loop-shaped portion and coupled with the battery housing.

2. The cylindrical battery according to claim 1,
wherein the tab coupling portion is in surface-to-surface contact with the first electrode tab, and the housing coupling portion is in surface-to-surface contact with the inner circumference of the battery housing.

3. The cylindrical battery according to claim 1,
wherein the loop-shaped portion includes:
a plurality of first portions disposed to be spaced apart along a circumferential direction at a first radial location of the exposed region of the first electrode tab;
a plurality of second portions disposed between first portions adjacent in the circumferential direction at a second radial location outside the first radial location; and
a third portion configured to define a space where the tab coupling portion extends by connecting the first portions adjacent in the circumferential direction and the second portion located therebetween.

4. The cylindrical battery according to claim 3,
wherein the first portion, the second portion, and the third portion are in surface-to-surface contact with the first electrode tab.

5. The cylindrical battery according to claim 3,
wherein the tab coupling portion extends from the second portion in a centripetal direction of the electrode assembly.

6. The cylindrical battery according to claim 1,
wherein the tab coupling portion extends in a linear shape, an arc shape, or a combined shape thereof.

7. The cylindrical battery according to claim 5,
wherein a gap is provided between the tab coupling portion and the third portion.

8. The cylindrical battery according to claim 7,
wherein the third portion extends in a linear shape, an arc shape, or a combined shape thereof.

9. The cylindrical battery according to claim 7,
wherein the gap extends in a linear shape, an arc shape, or a combined shape thereof.

10. The cylindrical battery according to claim 1,
wherein the opening region extends radially from a center of the electrode assembly.

11. The cylindrical battery according to claim 1,
wherein a distance from the inner side of the loop-shaped portion to an edge of a winding hole of the electrode assembly is greater than or equal to a length of the tab coupling portion.

12. The cylindrical battery according to claim 1,
wherein an open portion is provided in one axial side of the battery housing, and
the housing coupling portion is connected to the inner circumference of the battery housing in which the open portion is provided.

13. The cylindrical battery according to claim 12,
wherein the housing coupling portion is connected to an inner circumference of a beading portion provided near the open portion of the battery housing and depressed in a centripetal direction.

14. The cylindrical battery according to claim 13, further comprising:
a housing cover configured to cover the open portion; and
a sealing gasket interposed between the housing cover and the battery housing,
wherein the housing coupling portion is interposed and fixed between the sealing gasket and the beading portion.

15. The cylindrical battery according to claim 1,
wherein the electrode assembly further includes a second electrode tab made of an uncoated portion, and
the second electrode tab is electrically connected to a terminal provided on the other axial side of the battery housing.

16. The cylindrical battery according to claim 1,
wherein a winding hole is provided at a center of the electrode assembly, and
a current collector hole facing the winding hole is provided at a center of the loop-shaped portion.

17. The cylindrical battery according to claim 1,
wherein the tab coupling portion and the housing coupling portion are connected via the loop-shaped portion.

18. The cylindrical battery according to claim 1,
wherein the loop-shaped portion forms a closed loop.

19. The cylindrical battery according to claim 1,
wherein the loop-shaped portion has at least one cut portion.

20. The cylindrical battery according to claim 1,
wherein the housing coupling portion includes:
a contact portion coupled to the inner circumference of the battery housing; and
a connection portion configured to connect the contact portion and the loop-shaped portion.

21. The cylindrical battery according to claim 20,
wherein the contact portion extends in a direction corresponding to the circumferential direction of the inner circumference of the battery housing.

22. The cylindrical battery according to claim 20,
wherein the connection portion extends in a centrifugal direction and an axial direction.

23. The cylindrical battery according to claim 20,
wherein the connection portion has at least one bending portion.

24. The cylindrical battery according to claim 23,
wherein the bending portion protrudes in a centripetal direction or an axis direction of the electrode assembly.

25. A battery pack, comprising the cylindrical battery according to any one of claims 1 to 24.

26. A vehicle, comprising the battery pack according to claim 25.

27. A current collector, which electrically connects an electrode assembly and a battery housing included in a cylindrical battery, the current collector comprising:
a loop-shaped portion configured to surround a periphery of a central axis of the electrode assembly to define an opening region where an electrode tab made of an uncoated portion is exposed at one side end of the electrode assembly;
a tab coupling portion configured to extend toward the opening region from an inner side of the loop-shaped portion adj acent to the opening region and coupled with the electrode tab exposed through the opening region; and
a housing coupling portion configured to extend toward an inner circumference of the battery housing from an outer side of the loop-shaped portion and coupled with the battery housing.

28. The current collector according to claim 27,
wherein the loop-shaped portion includes:
a plurality of first portions disposed to be spaced apart along a circumferential direction at a first radial location of the exposed region of the electrode tab;
a plurality of second portions disposed between first portions adjacent in the circumferential direction at a second radial location outside the first radial location; and
a third portion configured to define a space where the tab coupling portion extends by connecting the first portions adjacent in the circumferential direction and the second portion located therebetween.

29. The current collector according to claim 28,
wherein the first portion, the second portion and the third portion are located on the same plane.

30. The current collector according to claim 28,
wherein the tab coupling portion extends from the second portion in a centripetal direction of the electrode assembly.

31. The current collector according to claim 27,
wherein the tab coupling portion extends in a linear shape, an arc shape, or a combined shape thereof.

32. The current collector according to claim 30,
wherein a gap is provided between the tab coupling portion and the third portion.

33. The current collector according to claim 32,
wherein the third portion extends in a linear shape, an arc shape, or a combined shape thereof.

34. The current collector according to claim 32,
wherein the gap extends in a linear shape, an arc shape, or a combined shape thereof.

35. The current collector according to claim 27,
wherein the opening region extends radially from a center of the electrode assembly.

36. The current collector according to claim 27,
wherein a current collector hole is provided at a center of the loop-shaped portion.

37. The current collector according to claim 27,
wherein the tab coupling portion and the housing coupling portion are connected via the loop-shaped portion.

38. The current collector according to claim 27,
wherein the loop-shaped portion forms a closed loop.

39. The current collector according to claim 27,
wherein the loop-shaped portion has at least one cut portion.

40. The current collector according to claim 27,
wherein the housing coupling portion includes:
a contact portion configured to contact the battery housing; and
a connection portion configured to connect the contact portion and the loop-shaped portion.

41. The current collector according to claim 40,
wherein the contact portion extends in the circumferential direction.

42. The current collector according to claim 40,
wherein the connection portion extends in a centrifugal direction and an axial direction of the electrode assembly.

43. The current collector according to claim 40,
wherein the connection portion has at least one bending portion.

44. The current collector according to claim 43,
wherein the bending portion protrudes in a centripetal direction or an axis direction of the electrode assembly.
